# EUROPÄISCHE PATENTSCHRIFT

(11) **EP 1 700 750 B1**
(45) Veröffentlichungstag und Bekanntmachung des Hinweises auf die Patenterteilung: **22.08.2007**
(21) Anmeldenummer: 05005262.0
(22) Anmeldetag: 10.03.2005
(51) Int. Cl.: B60R 21/00, B60R 21/01

(54) **Verfahren zur Steuerung einer Fahrzeugsicherheitseinrichtung**
Method of controlling a vehicle safety device
Méthode de commande un appareil de sécurité pour véhicule

(43) Veröffentlichungstag der Anmeldung: 13.09.2006
(73) Patentinhaber: Delphi Technologies, Inc., Troy, MI 48007 (US)
(72) Erfinder: Darvish, Abtin, 42119 Wuppertal (DE)
(74) Vertreter: Manitz, Finsterwald & Partner GbR

(56) Entgegenhaltungen:
- EP-A- 1 502 823
- DE-A1- 10 010 633
- DE-A1- 10 019 416
- DE-A1- 19 609 176
- GB-A- 2 335 521
- US-A1- 2004 176 897
- US-B1- 6 856 868

## Beschreibung

Die Erfindung betrifft ein Verfahren zur Steuerung einer Fahrzeugsicherheitseinrichtung, bei dem Signale von Bewegungssensoren zur Beurteilung der Fahrzeugbewegung berücksichtigt werden und eine Fahrzeugsicherheitseinrichtung, mit der das Verfahren durchgeführt bzw. bei der das Verfahren angewendet werden kann.

Ein solches Verfahren kann zum Beispiel eingesetzt werden um zu erkennen, ob eine Situation vorliegt, in der eine Überroll- oder Überschlagbewegungen eines Kraftfahrzeuges droht, um ggf. geeignete Sicherheitsmaßnahmen einleiten zu können. Insbesondere sollen dann z.B. die Auslösemechanismen für entsprechende Sicherheitseinrichtungen, wie für den Ausfahrmechanismus eines Überrollbügels, für einen Gurtstraffer oder für einen Airbag "scharf' geschaltet werden. Das Scharfschalten wird auch als "arming" bezeichnet.

Das Sicherheitssystem soll z.B. immer dann scharf geschaltet sein, wenn die Fahrzeugbewegung derart ist, dass ein Überschlag droht. Die Logik zum Scharfschalten des Sicherheitssystems muss daher empfindlicher sein als die Auslöselogik des Fahrzeugsicherheitssystems selbst, die erst dann eingreift, wenn zum Beispiel tatsächlich ein Überschlag stattfindet.

Die Logik zum Scharfschalten darf jedoch nicht derart empfindlich sein, dass das System ständig scharf ist. Zum Beispiel bei Systemen, bei denen periodisch und automatisch die Funktionsfähigkeit geprüft wird, würde ein permanent scharfes System als Fehler detektiert werden.

Eine große Gefahr, dass eine permanente Scharfschaltung vorliegt, droht zum Beispiel beim Befahren rauer Straßenoberflächen. Hier treten hohe vertikale Beschleunigungen auf, ohne dass die Gefahr einer Rotationsbewegung vorläge, die zu einem Überschlag führen könnte. Eine andere Situation, in der permanentes Scharfschalten der Sicherheitsvorrichtung droht, ist das Befahren einer kurvigen Straße, wobei die lateralen Kräfte sehr hoch sein können.

DE 100 10 633 A1 beschreibt ein Verfahren zum Erkennen einer Rollover-Situation, bei der die Signale eines Sensors für eine translatorische Bewegung und die Signale eines Sensors für eine rotatorische Bewegung miteinander verknüpft werden und die so erzeugte dynamische Schwelle mit einem aus der Drehrate abgeleiteten Kriterium verglichen wird.

EP 1 502 823 A1 beschreibt einen Detektor für eine Rollover-Situation, bei dem ein Schwellwert zur Detektion einer Rollover-Situation angepasst wird.

US 6,856,868 B1 beschreibt die Verwertung von Signalen von Sensoren, die in unterschiedlicher Richtung wirken.

Ein Verfahren zur Steuerung einer Fahrzeugsicherheitseinrichtung mit den Merkmalen des Oberbegriffes des Anspruches 1 ist aus GB 2,335,521 A bekannt.

Es ist die Aufgabe der vorliegenden Erfindung ein Verfahren und eine Einrichtung anzugeben, mit deren Hilfe eine Fahrzeugbewegung sicherer beurteilt werden kann, insbesondere, ob eine kritische Situation vorliegt oder nicht.

Diese Aufgabe wird mit einem Verfahren mit den Merkmalen des Anspruchs 1 und eine Einrichtung mit den Merkmalen des Anspruchs 14 gelöst. Unteransprüche sind auf vorteilhafte Ausgestaltungen gerichtet. Eine besonders vorteilhafte Verwendung ist Gegenstand des Anspruches 15.

Bei dem erfindungsgemäßen Verfahren werden die Signale von wenigstens zwei Bewegungssensoren gemessen, die dahingehend voneinander unabhängig sind, dass sie zur Messung von Bewegungen unterschiedlicher Richtung angeordnet oder ausgestaltet sind.

Beispielsweise können die Bewegungssensoren derart ausgewählt bzw. angeordnet sein, dass sie die laterale, die vertikale und/oder die longitudinale Beschleunigung, also Beschleunigungen in unterschiedlichen linearen Richtungen, messen. Bei anderen Ausgestaltungen sind Bewegungssensoren vorgesehen bzw. derart angeordnet, um die Winkelgeschwindigkeit um eine laterale, um eine longitudinale oder um eine vertikale Achse, also die Winkelgeschwindigkeit in unterschiedlichen Rotationsrichtungen, messen. Bei wiederum anderen Ausgestaltungen werden Kombinationen derartiger bzw. derartig angeordneter Bewegungssensoren eingesetzt um z.B. die lineare Beschleunigung in einer Richtung einerseits und die Winkelgeschwindigkeit um eine Achse andererseits auszuwerten. Die Erfindung ist aber nicht auf diese Beispiele für die Auswahl bzw. Anordnung der Bewegungssensoren beschränkt.

Im vorliegenden Text ist mit dem Begriff "Signal" jeweils der Absolutbetrag des Messsignals gemeint.

Die Signale der wenigstens zwei unabhängigen Bewegungssensoren werden mit zumindest jeweils einem ihnen zugeordneten Schwellwert verglichen. Diese Vergleiche werden bei der Beurteilung der Fahrzeugbewegung berücksichtigt. Es werden also zur Beurteilung der Fahrzeugbewegung die Signale wenigstens zweier Bewegungssensoren eingesetzt, die unterschiedliche Bewegungen messen. Die Schwellwerte der einzelnen Sensoren können dabei niedrig gewählt werden, um die einzelne Messung nicht zu unempfindlich zu gestalten. Es ist jedoch sichergestellt, dass z.B. beim Überschreiten nur eines Schwellwertes für das Signal eines Bewegungssensors noch keine Einstufung als kritisch vorgenommen wird, sondern erst, wenn auch ein weiterer unabhängiger Sensor eine Schwellwertüberschreitung misst. Trotz der hohen Empfindlichkeit der einzelnen Sensormessung ist also eine große Robustheit gegen ein unerwünschtes Einstufen als kritisch gegeben.

Bei einer Einstufung als kritisch kann eine Sicherheitsvorrichtung direkt ausgelöst werden. Besonders vorteilhaft ist das Verfahren jedoch einsetzbar, um festzulegen, ob eine Sicherheitseinrichtung scharf geschaltet werden soll, weil zwar z.B. noch kein Überschlag stattfindet aber bereits droht.

Je nach Anwendung oder gewünschtem Sicherheitsniveau werden Gruppen von Schwellwerten zu den Signalen der unabhängigen Sensoren ausgewählt, die jeweils zumindest zwei Schwellwerte umfassen, die unabhängigen Sensoren zugeordnet sind. Es können mehrere derartige Gruppen festgelegt sein und eine Einstufung als kritisch dann vorgenommen werden, wenn die Schwellwerte einer der so festgelegten Gruppen erreicht oder überschritten werden. Für das Signal eines Sensors können dabei mehrere unterschiedlich große Schwellwerte vorgesehen sein, die in unterschiedlichen Gruppen eingeordnet sind.

Für jeden Bewegungssensor wird eine Anzahl von Schwellwerten festgelegt. Für die Schwellwerte eines einzelnen Bewegungssensors gilt dabei z.B., dass der r-te Schwellwert größer ist als der q-te Schwellwert, wenn r größer als q ist. Eine Fahrzeugbewegung wird als kritisch eingestuft, wenn der Absolutbetrag des Signals wenigstens eines Bewegungssensors einen ihm zugeordneten r-ten Schwellwert erreicht oder überschreitet und der Absolutbetrag des Signals wenigstens eines zweiten Bewegungssensors einen ihm zugehörigen q-ten Schwellwert erreicht oder überschreitet.

Bei dem r-ten Schwellwert kann es sich dabei z.B. um einen jeweiligen "nominalen" Schwellwert und bei dem q-ten Schwellwert um einen jeweiligen "minimalen" Schwellwert für das Signal des jeweiligen Bewegungssensors handeln. Unterschiedliche Anzahl und Abstufung der Schwellwerte für die Signale der einzelnen Bewegungssensoren führt zu unterschiedlichen Prüfungsempfindlichkeiten. Die Schwellwerte gleicher Nummer q, r, ... unterschiedlicher Bewegungssensoren sind nicht notwendigerweise gleich.

Das Verfahren kann zum Beispiel so durchgeführt werden, dass bei Erreichen oder Überschreiten eines zweiten Schwellwertes für das Signal eines ersten Bewegungssensors geprüft wird, ob der erste Schwellwert für das Signal eines zweiten Bewegungssensors, der vorzugsweise kleiner als ein zweiter Schwellwert für das Signal des zweiten Bewegungssensors ist, erreicht oder überschritten wird um bejahendenfalls eine Einstufung als kritisch vorzunehmen.

Bei einer anderen Ausgestaltung wird geprüft, ob die Signale von wenigstens zwei Bewegungssensoren den ihnen jeweils zugeordneten ersten, kleineren Schwellwert erreichen oder überschreiten. Wenn dies der Fall ist, wird geprüft, ob eines der Signale auch den ihm zugeordneten zweiten, höheren Schwellwert überschreitet, bevor die Fahrzeugbewegung als kritisch eingestuft wird.

Bevorzugte Ausgestaltungen des erfindungsgemäßen Verfahrens verwenden zumindest die Signale von einem Bewegungssensor, der die laterale Beschleunigung misst und/oder einen Bewegungssensor, der die vertikale Beschleunigung misst. Gerade für die Feststellung einer kritischen Rollbewegung des Fahrzeuges sind diese Beschleunigungen von vorrangiger Bedeutung. Andere Ausgestaltungen berücksichtigen die longitudinale Beschleunigung des Fahrzeuges oder die Winkelgeschwindigkeit um eine waagerechte Achse, um eine vertikale Achse oder um eine longitudinale Achse. Bei entsprechender Ausgestaltung der Auswertung können auch schräge Richtungen und Achsen verwendet werden.

Bei einer Weiterbildung des erfindungsgemäßen Verfahrens wird ein Grenzrollwinkel für die seitliche Fahrzeugneigung festgelegt, bei dessen Erreichen oder Überschreiten die Fahrzeugbewegung auf jeden Fall als kritisch eingestuft werden soll.

Sind z.B. Bewegungssensoren vorgesehen, die die laterale Beschleunigung und/oder die vertikale Beschleunigung messen, so wird der kleinste Schwellwert für das Signal des Bewegungssensors, der die laterale Beschleunigung misst, und/oder der kleinste Schwellwert für das Signal des Bewegungssensors, der die vertikale Beschleunigung misst, derart festgelegt, dass eine Fahrzeugneigung gleich oder größer dem Grenzrollwinkel aufgrund des Signales, das durch die Erdbeschleunigung g in dem fahrzeugfesten Koordinatensystem hervorgerufen wird, zu einer Einstufung als kritisch führt.

Bei einer Ausgestaltung, bei der die laterale Beschleunigung ausgewertet wird, kann dazu der kleinste Schwellwert für das Signal des Bewegungssensors, der die laterale Beschleunigung misst, kleiner als der Betrag des Produktes aus dem Sinuswert des gewählten Grenzrollwinkels mit der Erdbeschleunigung festgelegt werden. Befindet sich das Fahrzeug in einer Rollbewegung, die eine Neigung über diesen Grenzrollwinkel hinaus bedeutet, so resultiert bereits aus der Erdbeschleunigung eine laterale Beschleunigung im fahrzeugfesten Koordinatensystem, die größer ist als der Betrag des Produktes aus dem Sinus des Grenzrollwinkels mit der Erdbeschleunigung, so dass in einem solchen Fall die Fahrzeugbewegung immer als kritisch eingestuft wird und zum Beispiel ein Sicherheitssystem scharf geschaltet wird.

Vorteilhafterweise werden die jeweils kleinsten Schwellwerte für die einzelnen Bewegungssensoren derart gewählt, dass sie nicht kleiner sind als die Absolutbeträge typischer Signale, die von dem jeweiligen Bewegungssensor durch eine Fahrzeugbewegung in einer Richtung oder Art hervorgerufen werden, die nicht der Richtung oder Art der Fahrzeugbewegung entspricht, für deren Messung dieser Bewegungssensor ausgestaltet bzw. angeordnet ist. Damit ist sichergestellt, dass die kleinsten Schwellwerte jeweils über der Überkreuzempfindlichkeit ("cross axis sensitivity") der einzelnen Sensoren liegen.

Eine weitere bevorzugte Ausgestaltung sieht vor, dass die jeweils kleinsten Schwellwerte derart gewählt werden, dass sie größer sind als das typische Signalrauschen, um zu verhindern, dass alleine dadurch eine fehlerhafte Einstufung der Fahrzeugbewegung erfolgt.

Eine erfindungsgemäße Fahrzeugsicherheitseinrichtung umfasst zumindest zwei Bewegungssensoren, die dahingehend voneinander unabhängig sind, dass sie zur Messung von Fahrzeugbewegungen unterschiedlicher Richtung oder Art ausgestaltet oder angeordnet sind, eine Speichereinrichtung zur Speicherung von Schwellwerten für die Signale der wenigstens zwei unabhängigen Bewegungssensoren, eine Vergleichseinrichtung zum Vergleich der Absolutbeträge der Signale der wenigstens zwei Bewegungssensoren mit jeweils wenigstens einem zugehörigen Schwellwert, und eine Beurteilungseinrichtung zur Einstufung der Fahrzeugbewegung als kritisch, wenn der Absolutbetrag des Signals wenigstens eines Bewegungssensors einen ihm zugeordneten Schwellwert und der Absolutbetrag des Signals wenigstens eines weiteren Bewegungssensors einen ihm zugeordneten Schwellwert erreichen oder überschreiten.

Mit der erfindungsgemäßen Einrichtung kann das erfindungsgemäße Verfahren durchgeführt werden und die damit verbundenen Vorteile erreicht werden. Bevorzugte Ausführungsformen der erfindungsgemäßen Vorrichtung ergeben sich in analoger Weise aus den bevorzugten Ausgestaltungen des erfindungsgemäßen Verfahrens.

Im Folgenden wird die Erfindung anhand beispielhafter Ausgestaltungen unter Bezugnahme auf die beigefügten Figuren im Detail beschrieben. Es zeigen:
- Fig. 1: schematisch ein bewegtes Kraftfahrzeug mit einem Koordinatensystem,
- Fig. 2: eine erste Ausgestaltung einer Logik zur Durchführung eines erfindungsgemäßen Verfahrens,
- Fig. 3: eine zweite Ausgestaltung einer Logik zur Durchführung eines erfindungsgemäßen Verfahrens,
- Fig. 4: ein Flussdiagramm zur Logik der Fig. 3,
- Fig. 5: eine schematische Erläuterung einer Berücksichtigung eines Grenzrollwinkels,
- Fig. 6: die Logik für eine dritte Ausgestaltung des erfindungsgemäßen Verfahrens, und
- Fig. 7: die Logik zur Durchführung einer vierten Ausgestaltung eines erfindungsgemäßen Verfahrens.

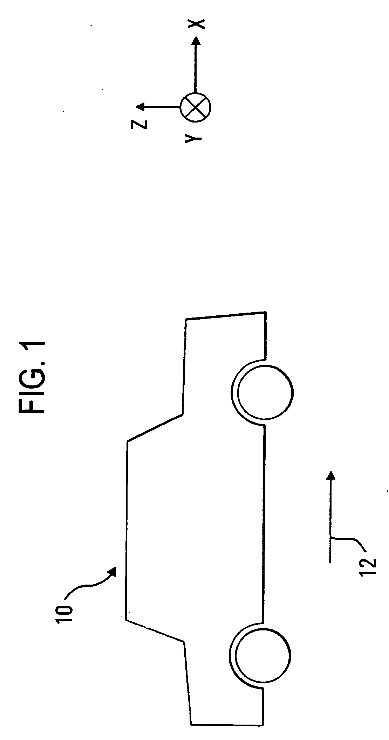

Fig. 1 zeigt ein Kraftfahrzeug 10, das sich in Richtung 12 bewegt. Angegeben ist weiterhin ein Koordinatensystem mit der longitudinalen Achse X, einer lateralen Achse Y, die in die Figurenebene hineinzeigt, und einer vertikalen Achse Z.

Das hier verwendete Koordinatensystem dient dazu, den physikalischen Sachverhalt darzulegen. Es weicht von der SAE-Konvention ab, bei der die X-Richtung nach vorne, die Y-Richtung von links nach rechts und die Z-Richtung nach unten definiert wären. Für die angegebenen beispielhaften Wertebereiche der Sensoren ist dies jedoch ohne Belang, da nur die Absolutbeträge betrachtet werden.

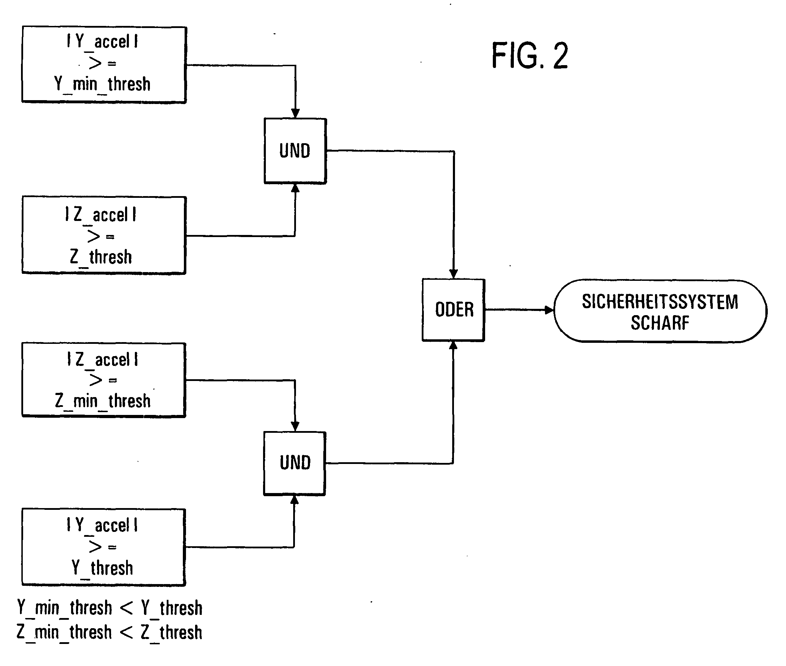

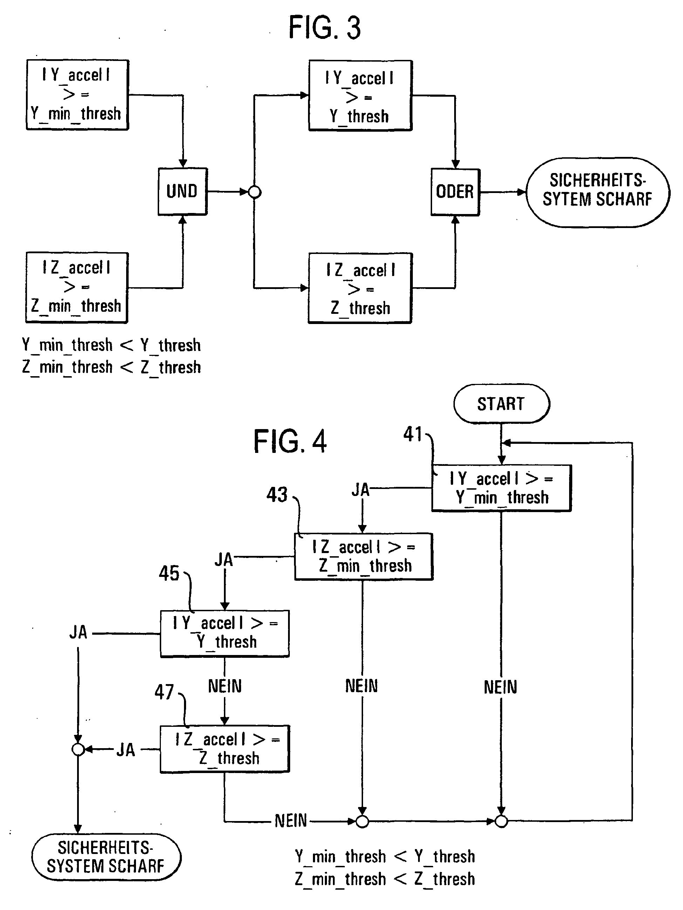

Um ein Verfahren gemäß der Fig. 2 oder 3 durchzuführen, weist dieses Kraftfahrzeug einen Beschleunigungssensor zur Messung der Beschleunigung Y_accel in Y-Richtung und einen Beschleunigungssensor zur Messung der Beschleunigung Z_accel in Z-Richtung auf. Es werden bei den geschilderten Ausgestaltungen die Absolutbeträge der Signale verwendet, auch wenn dies nicht der extra erwähnt wird.

In einem Speicher sind Schwellwerte für diese Beschleunigungen abgelegt. Insbesondere sind ein erster Schwellwert Y_min_thresh und ein zweiter Schwellwert Y_thresh für die Beschleunigung in Y-Richtung festgelegt, wobei Y_thresh größer ist als Y_min_thresh. Für die Beschleunigung in Z-Richtung sind ein erster, kleinerer Schwellwert Z_min_thresh und ein größerer Schwellwert Z_thresh festgelegt. Y_thresh und Z_thresh bezeichnen beispielsweise nominale Schwellwerte und Y_min_thresh und Z_min_thresh minimale Schwellwerte.

Die jeweiligen Schwellwerte berücksichtigen gegebenenfalls eingestellte Offsets der Sensoren. So kann z.B. der Sensor für die vertikale Beschleunigung einen derartigen Offset aufweisen, dass im Ruhezustand nicht die tatsächlich vorhandene Erdbeschleunigung g angezeigt wird, sondern der Beschleunigungswert Null.

Beispiele für die Festlegung derartiger Schwellwerte werden weiter unten angegeben.

Eine Recheneinheit in dem Kraftfahrzeug vergleicht ständig die gemessenen Beschleunigungswerte mit diesen Schwellwerten.

Ergibt die Prüfung bei einem Verfahren der Fig. 2 zum Beispiel, dass die Beschleunigung Y_accel in Y-Richtung größer oder gleich Y_thresh ist und gleichzeitig die Beschleunigung Z_accel in Z-Richtung größer oder gleich Z_min_thresh ist oder dass die Beschleunigung Z_accel in Z-Richtung größer oder gleich Z_thresh und die Beschleunigung in Y-Richtung größer oder gleich Y_min_thresh ist, so wird ein Sicherheitssystem scharf geschaltet.

Bei der Logik der Fig. 3 wird ebenfalls ein Beschleunigungssensor für die Y-Beschleunigung Y_accel und ein Beschleunigungssensor für die Z-Beschleunigung Z_accel eingesetzt. Stellt die Vergleichseinrichtung fest, dass sowohl Y_accel größer oder gleich Y_min_thresh als auch Z_accel größer oder gleich Z_min_thresh ist, so wird abgeprüft, ob entweder Y_accel auch größer als oder gleich Y_thresh ist, oder Z_accel größer als oder gleich Z_thresh ist. Wenn eine der beiden letztgenannten Bedingungen erfüllt ist, wird das Sicherheitssystem scharf geschaltet.

Fig. 4 zeigt ein Flussdiagramm, mit dem sich die Logik der Fig. 3 darstellen lässt. Zunächst wird in einem Schritt 41 geprüft, ob die Y-Beschleunigung Y_accel größer oder gleich Y _min_thresh ist. Ist dies der Fall, wird in einem Schritt 43 geprüft, ob die Z-Beschleunigung Z_accel größer oder gleich Z_min_thresh ist. Nur wenn auch dies der Fall ist, wird bei 45 geprüft, ob die Y-Beschleunigung Y_accel auch größer oder gleich Y_thresh ist. Ist dies der Fall, wird das Sicherheitssystem scharf geschaltet. Verläuft die Prüfung in Schritt 45 negativ, so wird in Schritt 47 abgeprüft, ob die Beschleunigung in Z-Richtung Z_accel größer oder gleich Z_thresh ist. Bejahendenfalls wird das Sicherheitssystem scharf geschaltet. Nur wenn auch diese Prüfung 47 negativ verläuft, bleibt das System im nicht scharfen Zustand.

Die Logiken der Fig. 2 und 3 bzw. der Algorithmus der Fig. 4 stellen zum Beispiel sicher, dass zwischen einer unkritischen vertikalen Beschleunigung zum Beispiel durch eine rauhe Straßenoberfläche und einer gefährlichen Rollbewegung diskriminiert werden kann. Fahren über eine rauhe Oberfläche bewirkt zum Beispiel vertikale Beschleunigungswerte, die größer sind als Z_thresh. Nur wenn gleichzeitig die Y-Beschleunigung Y_accel größer oder gleich dem Schwellwert Y_min_thresh für die Y-Beschleunigung ist, wird das Sicherheitssystem z.B. entsprechend der oberen Hälfte der Fig. 2 scharf geschaltet. Solche zusätzlichen Beschleunigungen in der lateralen Richtung treten zum Beispiel auf, wenn das Fahrzeug sich stark neigt und ein Überschlag droht.

Befindet sich das Fahrzeug andererseits in schneller Kurvenfahrt, treten Y-Beschleunigungen Y_accel auf, die größer sind als der Grenzwert Y_ thresh. Nur wenn gleichzeitig Beschleunigungen in vertikaler Richtung auftreten und Z_accel größer oder gleich Z_min_thresh ist, wird jedoch das Sicherheitssystem scharf geschaltet, da offensichtlich ein Überschlag droht (untere Hälfte der Fig. 2). Bei normaler schneller Kurvenfahrt, bei der nur starke Lateralbeschleunigungen auftreten, ohne dass eine starke vertikale Beschleunigung auftritt, bleibt das Sicherheitssystem im ungeschärften Zustand.

Ein vergleichbares Ergebnis wird erreicht, wenn die Logik der Fig. 3 verwendet wird. Hier werden zunächst die Beschleunigungen in Y- und Z-Richtung daraufhin überprüft, ob sie größer als die oder gleich den jeweils kleineren Schwellwerte Y_min_thresh bzw. Z_min_thresh sind. Ergibt die Prüfung, dass beide Beschleunigungswerte größer sind als die jeweiligen kleineren Schwellwerte, wird überprüft, ob einer der Beschleunigungswerte größer oder gleich dem ihm zugeordneten größeren Schwellwert Y_thresh bzw. Z_thresh ist. In diesem Fall wird das Sicherheitssystem scharf geschaltet.

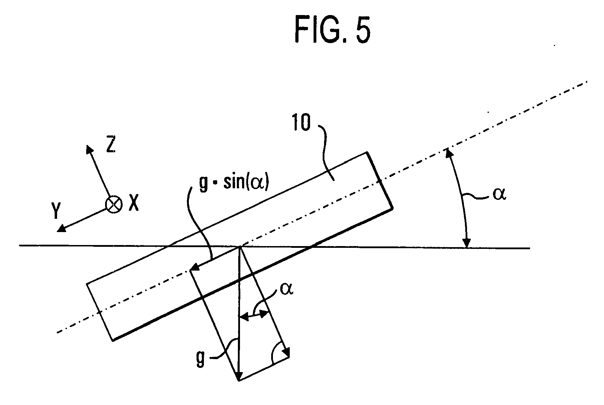

Die Bestimmung der Schwellwerte kann dabei wie folgt geschehen. Zunächst wird zum Beispiel ein Grenzrollwinkel α festgelegt, bei dessen Überschreiten die Prüfungsroutine der Erfindung auf jeden Fall eingeleitet werden soll. Zur Erläuterung wird auf Fig. 5 Bezug genommen, indem schematisch ein Fahrzeug 10 dargestellt ist, das sich in X-Richtung bewegt. Außerdem ist in Fig. 5 ein Koordinatensystem angegeben, das in dem Fahrzeug gültig ist. Dabei zeigt die X-Richtung in die Ebene hinein.

Angegeben ist die Erdbeschleunigung g. Wenn das allein durch die Erdbeschleunigung ausgelöste Signal des Bewegungssensors für die laterale Bewegung in Y-Richtung größer ist als der Absolutbetrag von g. sin(α), soll auf jeden Fall das erfindungsgemäße Verfahren starten. Insofern sollte der erste, kleinere Schwellwert für die laterale Beschleunigung auf jeden Fall kleiner als der oder gleich dem Absolutbetrag von g · sin(α) sein. Wird als Grenzrollwinkel zum Beispiel 20° bzw. -20° angenommen, sollte dementsprechend der erste, kleinere Grenzwert Y_min_thresh kleiner als oder gleich 0,3 g sein.

Ähnlich kann eine Festlegung für den kleineren Grenzwert Z_min_thresh vorgenommen werden. Dabei wird für dieses Beispiel davon ausgegangen, dass der Bewegungssensor zur Messung des vertikalen Beschleunigungswertes in dem Fahrzeug "kompensiert" ist. Dazu addiert der Sensor intern die einfache Erdbeschleunigung g zu dem gemessenen Signal, so dass im Sensor-Ruhezustand bei einer Fahrzeugneigung von 0° die vertikale Beschleunigung Null anstatt -1g angegeben wird. Damit eine laterale Fahrzeugneigung größer als ein Grenzrollwinkel α auf jeden Fall als kritisch eingestuft wird, wird der kleinere Schwellwert Z_min_thresh für die vertikale Bewegung kleiner oder gleich (1-cos (α)) gewählt. Wird als Grenzrollwinkel z.B. wieder 20° bzw. -20° angenommen, sollte dementsprechend der erste, kleinere Grenzwert Z_min_thresh kleiner als oder gleich 0,06 g sein.

Die obige Bestimmung schließt nicht aus, dass in dynamischen Fahrsituationen der jeweils so festgelegte minimale Schwellwert bereits bei kleineren Fahrzeugneigungen überschritten wird, wenn sich aufgrund der Fahrsituation zu den Beschleunigungswerten, die durch die Erdbeschleunigung hervorgerufen werden, zusätzliche Beschleunigungswerte ergeben.

Außerdem kann die Überkreuzempfindlichkeit der beiden Sensoren berücksichtigt werden. Typische Vibrationen einer rauhen Straßenoberfläche übersteigen in der Regel vertikale Beschleunigungen von 2 g nicht. Nimmt man eine Überkreuzsensitivität der Sensoren von 4 % an, führen vertikale Beschleunigungen von 2 g zu einem Signal am Bewegungssensor für die laterale Beschleunigung von (2 g) · 0,04 = 0,08 g. Der erste, kleinere Schwellwert Y_min_thresh für die Beschleunigung in Y-Richtung sollte daher größer sein als 0,08 g.

Laterale Beschleunigungen auf kurvenreichen Strecken sind in der Regel nicht größer als 1 g. Diese führen unter der Annahme einer Überkreuzsensitivität von 4 % zu einem Signal am Bewegungssensor für die Z-Beschleunigung von (1g) · 0,04 = 0,04 g. Der erste, kleinere Schwellwert Z_min_thresh für die Beschleunigung in Z-Richtung sollte dementsprechend größer oder gleich 0,04 g sein.

Schließlich sollte auch der Effekt des Signalrauschens nicht zu fehlerhaften Signalen führen. Wird zum Beispiel angenommen, dass der Beschleunigungssensor für die laterale Bewegung einen Messbereich von ± 7 g mit einer 10 Bit Auflösung hat, dann entspricht ein Zählimpuls etwa (2 . 7 g)/ 1024 = 0,014 g. Bei einem typischen angenommenen Rauschen von 4 Zählimpulsen sollte dementsprechend der erste, kleinere Schwellwert Y_min_thresh für die laterale Beschleunigung größer oder gleich 0,014 g · 4 = 0,06 g sein.

Unter der Annahme, dass der Beschleunigungssensor für die vertikale Beschleunigung einen Messbereich von ± 2,5 g und eine 10 Bit Auflösung hat, entspricht ein Zählimpuls etwa (2 . 2,5 g)/ 1024 = 0,005 g. Der erste, kleinere Schwellwert Z_min_thresh für die Beschleunigung in Z-Richtung sollte dementsprechend größer sein als 0,005 g · 4 = 0,02 g, wenn ein typisches Rauschen von 4 Zählimpulsen nicht als Signal gewertet werden soll.

Zusammengenommen ergibt sich aus diesen typischen beispielhaften Annahmen, dass die jeweils ersten, kleineren Schwellwerte die folgenden Bedingungen erfüllen sollten:
Y_min_thresh ≤ 0,3 g
Z_min_thresh ≤ 0,06 g
Y_min_thresh ≥ 0,08 g
Z_min_thresh ≥ 0,04 g
Y_min_thresh ≥ 0,06 g
Z_min_thresh ≥ 0,02 g.

Diese Bedingungen werden zum Beispiel erfüllt, wenn Z_min_thresh gleich 0,06 g und Y_min_thresh gleich 0,3 g gewählt wird. Als jeweils größere Grenzwerte kann Z_thresh gleich 0,12 g und Y_thresh gleich 1 g gewählt werden.

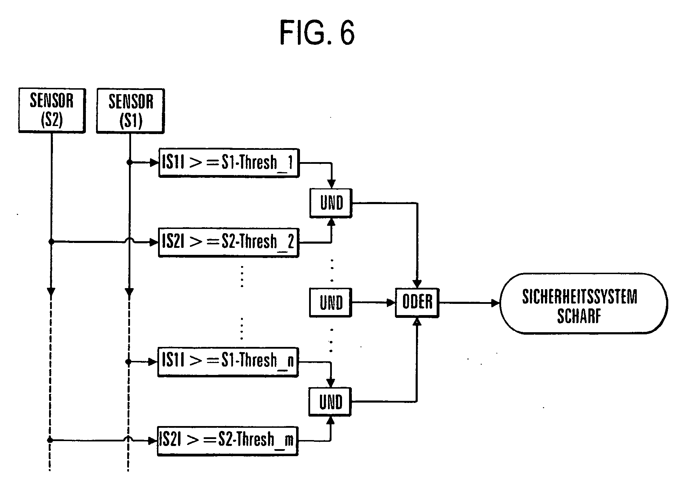

Die bisher beschriebenen Ausgestaltungen des Verfahrens verwenden zwei Sensoren mit jeweils zwei Schwellwerten. Ebenso ist es jedoch möglich, dass für einen Sensor eine höhere Anzahl von Schwellwerten eingesetzt wird, wie es in Fig. 6 dargestellt ist.

Hier sind zwei Sensoren S 1 und S2 vorgesehen. Jedem dieser Sensoren sind mehrere Schwellwerte zugeordnet. Die einzelnen Schwellwerte für das Signal des Sensors S 1 sind mit S1-Thresh_1, S1-Thresh_2, ... S1-Thresh_n, ... bezeichnet und die einzelnen Schwellwerte für das Signal des Sensors S2 entsprechend mit S2-Tresh_1, S2-Thresh_2, ..., S2-Thresh_m, ....

In Abhängigkeit davon, was für Sensoren vorgesehen sind und welche Fahrsituationen erfasst werden sollen, werden mehrere unterschiedliche Kombinationen von Sensorüberschreitungen als Bedingungen für das Scharfschalten des Sicherheitssystems festgelegt.

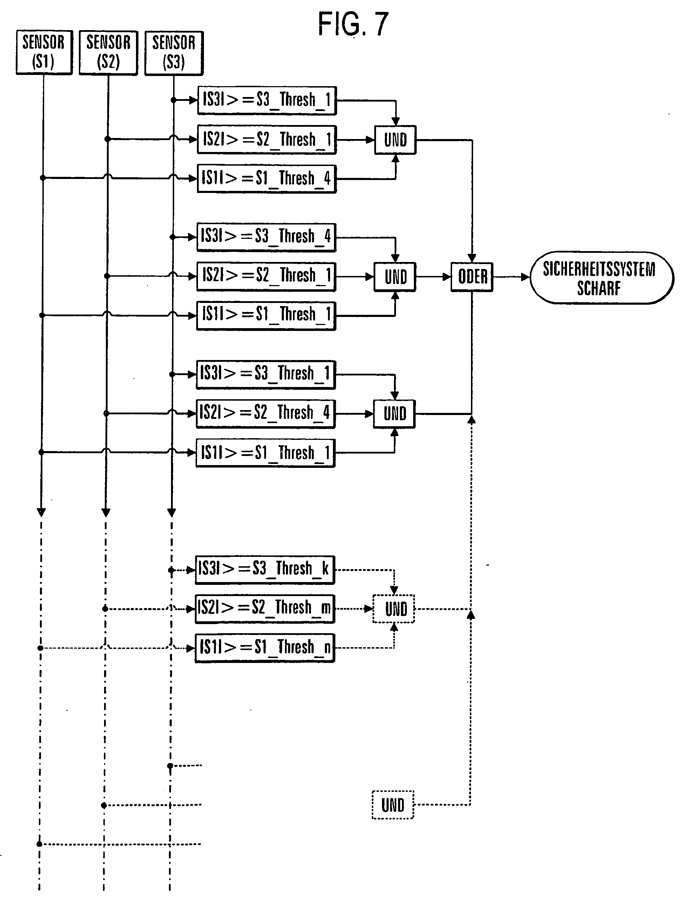

Außerdem können auch mehr als zwei Sensoren eingesetzt werden. Fig. 7 zeigt ein Beispiel mit drei Sensoren S1, S2, S3. Für das Signal des Sensors S1 sind Schwellwerte S1_Thresh_1, ... S1_Thresh_n, ... vorgesehen. Für das Signal des Sensors S2 sind Schwellwerte S2_Thresh_1, ... S2_Thresh_m, ... vorgesehen. Schließlich sind für den Sensor S3 Schwellwerte S3_Thresh_1, ... S3_Thresh_k, ... vorgesehen. Wie es in Fig. 7 beispielhaft dargestellt ist, können je nach Art der Sensoren und der zu überprüfenden Fahrsituationen unterschiedliche Kombinationen von überschrittenen Grenzwerten zur Scharfschaltung des Sicherheitssystems führen. Die Auswahl der Kombinationen wird in Abhängigkeit der zu überprüfenden Fahrsituationen festgelegt.

Die Erfindung ist nicht darauf beschränkt, dass nur Beschleunigungssensoren zur Messung der lateralen, vertikalen oder longitudinalen Beschleunigung eingesetzt werden. Andere Ausführungsformen verwenden z.B. entweder ausschließlich oder zusätzlich Sensoren, die die Winkelgeschwindigkeit um eine um die vertikale Achse, die horizontale Achse oder die longitudinale Achse messen.

Wie auch aus den geschilderten Ausgestaltungen hervorgeht, bewirkt die Erfindung, dass eine Fahrsituation nur dann als kritisch eingestuft wird und z.B. ein Sicherheitssystem scharf geschaltet wird, wenn bei Feststellung der Überschreitung eines nominalen Schwellwertes eines Bewegungssensors auch noch wenigstens ein Schwellwert wenigstens eines weiteren Bewegungssensors überschritten wird, der kleiner als der nominale Schwellwert für diesen weiteren Bewegungssensor ist.

## Patentansprüche

1. Verfahren zur Steuerung einer Fahrzeugsicherheitseinrichtung mit wenigstens zwei Bewegungssensoren, mit folgenden Schritten:
Messen der Signale (Y_accel, Z_accel) wenigstens zweier Bewegungssensoren, die dahingehend voneinander unabhängig sind, dass sie zur Messung von Bewegungen in unterschiedlicher Richtung angeordnet oder ausgestaltet sind,
Vergleichen des Absolutbetrags des Signals (Y_accel; Z_accel) von wenigstens einem der Bewegungssensoren mit wenigstens einem für dieses Signal festgelegten Schwellwert (Y_thrcsh; Z_thresh),
Vergleichen des Absolutbetrags des Signals (Z_accel; Y_accel) von wenigstens einem weiteren der Bewegungssensoren mit wenigstens einem für dieses Signal festgelegten Schwellwert (Z_min_thresh, Y_min_thresh), und
Einstufen einer Fahrzeugbewegung als kritisch oder nicht kritisch in Abhängigkeit der Vergleichsergebnisse,
**dadurch gekennzeichnet, dass**
für jeden Bewegungssensor eine Anzahl von Schwellwerten festgelegt wird und die Fahrzeugbewegung als kritisch eingestuft wird, wenn der Absolutbetrag des Signals wenigstens eines Bewegungssensors einen ihm zugeordneten r-ten Schwellwert erreicht oder überschreitet und der Absolutbetrag des Signals wenigstens eines zweiten Bewegungssensors einen ihm zugehörigen q-ten Schwellwert erreicht oder überschreitet, wobei für die Schwellwerte, die einem Bewegungssensor zugeordnet sind, gilt, dass der r-te Schwellwert größer ist als der q-te Schwellwert, wenn r größer als q ist.

2. Verfahren nach Anspruch 1, bei dem eine Fahrzeugsicherheitseinrichtung scharf geschaltet wird, wenn die Fahrzeugbewegung als kritisch eingestuft wird.

3. Verfahren nach einem der Ansprüche 1 oder 2, bei dem Gruppen von Schwellwerten festgelegt werden, die jeweils zumindest zwei Schwellwerte umfassen, die unabhängigen Bewegungssensoren zugeordnet sind, wobei eine Fahrzeugbewegung als kritisch eingestuft wird, wenn zumindest die Absolutbeträge der Signale der Bewegungssensoren, denen die Schwellwerte einer Gruppe zugeordnet sind, erreicht oder überschritten werden.

4. Verfahren nach einem der Ansprüche 1 bis 3, bei dem die Fahrzeugbewegung als kritisch eingestuft wird, wenn der Absolutbetrag des Signals wenigstens eines Bewegungssensors einen ihm zugehörigen zweiten Schwellwert (Y_thresh; Z_thresh) erreicht oder überschreitet und der Absolutbetrag des Signals wenigstens eines weiteren Bewegungssensors einen ihm zugehörigen ersten Schwellwert (Z_min_thresh; Y_min_thresh) erreicht oder überschreitet, der kleiner ist, als ein dem weiteren Bewegungssensor zugeordneter zweiter Schwellwert.

5. Verfahren nach einem der Ansprüche 1 bis 3, bei dem die Fahrzeugbewegung als kritisch eingestuft wird, wenn die Absolutbeträge der Signale von wenigstens zwei Bewegungssensoren einen ihnen jeweils zugehörigen ersten Schwellwert (Y_min_thresh, Z_min_thresh) erreichen oder überschreiten und der Absolutbetrag des Signals wenigstens eines dieser Bewegungssensoren einen ihm zugehörigen zweiten Schwellwert (Y_thresh, Z_thresh) erreicht oder überschreitet, der derart ausgewählt ist, dass er größer als der erste diesem Bewegungssensor zugeordnete Schwellwert ist.

6. Verfahren nach einem der Ansprüche 1 bis 5, bei dem die verwendeten Signale zumindest ein Signal (Y_accel) von einem Bewegungssensor umfassen, der die laterale Beschleunigung misst.

7. Verfahren nach Anspruch 6, bei dem
der kleinste Schwellwert (Y_min_thresh) für das Signal des Bewegungssensors, der die laterale Beschleunigung misst, derart festgelegt wird, dass bei Überschreiten oder Erreichen eines festgelegten Grenzrollwinkels (α) auf jeden Fall eine Einstufung der Fahrzeugbewegung als kritisch möglich ist, vorzugsweise indem der kleinste Schwellwert (Y_min_thresh) für das Signal des Bewegungssensors, der die laterale Beschleunigung misst, kleiner als der oder gleich dem Absolutbetrag des Produktes aus dem Sinuswert des Grenzrollwinkels (α) mit der Erdbeschleunigung (g) festgelegt wird.

8. Verfahren nach einem der Ansprüche 1 bis 7, bei dem die verwendeten Signale zumindest ein Signal (Z_accel) von einem Bewegungssensor umfassen, der die vertikale Beschleunigung misst.

9. Verfahren nach Anspruch 8, bei dem der kleinste Schwellwert (Z_min_thresh) für das Signal des Bewegungssensors, der die vertikale Beschleunigung misst, derart festgelegt wird, dass bei Erreichen oder Überschreiten eines festgelegten Grenzrollwinkels (α) auf jeden Fall eine Einstufung der Fahrzeugbewegung als kritisch möglich ist.

10. Verfahren nach einem der Ansprüche 1 bis 9, bei dem die verwendeten Signale zumindest ein Signal (X_accel) von einem Bewegungssensor umfassen, der die longitudinale Beschleunigung misst.

11. Verfahren nach einem der Ansprüche 1 bis 10, bei dem die verwendeten Signale zumindest ein Signal von einem Bewegungssensor, der die Winkelgeschwindigkeit um eine waagrechte Querachse (Y-Achse) misst, und/oder zumindest ein Signal von einem Bewegungssensor, der die Winkelgeschwindigkeit um eine vertikale Achse (Z-Achse) misst, und/oder zumindest ein Signal von einem Bewegungssensor, der die Winkelbeschleunigung um eine longitudinale Achse (X-Achse) misst, umfassen.

12. Verfahren nach einem der Ansprüche 1 bis 11, bei dem der jeweils kleinste Schwellwert (Y_min_thresh, Z_min_thresh), der einem Signal eines Bewegungssensors zugeordnet ist, derart gewählt ist, dass er nicht kleiner ist als die Absolutbeträge typischer Signale, die in diesem Bewegungssensor durch eine Fahrzeugbewegung in einer Richtung oder Art hervorgerufen werden, die nicht der Richtung oder Art der Fahrzeugbewegung entspricht, zu deren Messung dieser Bewegungssensor angeordnet oder ausgestaltet ist.

13. Verfahren nach einem der Ansprüche 1 bis 12, bei dem der jeweils kleinste Schwellwert (Y_min_thresh, Z_min_thresh), der einem Signal eines Bewegungssensors zugeordnet ist, derart gewählt ist, dass er größer als das typische Signalrauschen ist.

14. Fahrzeugsicherheitseinrichtung zur Durchführung eines Verfahrens nach einem der Ansprüche 1 bis 13, mit
wenigstens zwei Bewegungssensoren, die dahingehend voneinander unabhängig angeordnet oder ausgestaltet sind, dass sie zur Messung von Bewegungen in unterschiedlichen Richtungen dienen können,
einer Speichereinrichtung zur Speicherung einer Anzahl von Schwellwerten für die Signale der wenigstens zwei unabhängigen Bewegungssensoren,
einer Vergleichseinrichtung zum Vergleich der Absolutbeträge der Signale der wenigstens zwei Bewegungssensoren mit Schwellwerten,
einer Beurteilungseinrichtung zur Einstufung der Fahrzeugbewegung als kritisch, wenn der Absolutbetrag des Signals wenigstens eines Bewegungssensors einen ihm zugeordneten r-ten Schwellwert und der Absolutbetrag des Signals wenigstens eines weiteren Bewegungssensors einen ihm zugeordneten q-ten Schwellwert erreichen oder überschreiten.

15. Verwendung eines Verfahrens nach einem der Ansprüche 1 bis 13 oder einer Einrichtung nach Anspruch 14 zur Beurteilung, ob eine Überroll- oder Überschlagsbewegung eines Fahrzeuges droht.

## Claims

1. A method for the control of a vehicle safety device having at least two motion sensors comprising the following steps:
measuring the signals (Y_accel, Z_accel) of at least two motion sensors which are independent of one another in that they are arranged or designed for the measurement of movements in a different direction;
comparing the absolute magnitude of the signal (Y_accel; Z_accel) of at least one of the motion sensors with at least one threshold value (Y_thresh; Z_thresh) fixed for this signal;
comparing the absolute magnitude of the signal (Z_accel; Y_accel) of at least a further one of the motion sensors with at least one threshold value (Z_min_thresh; Y_min_thresh) fixed for this signal; and
classifying a vehicle movement as critical or non-critical in dependence on the comparison results,
**characterized in that**
a number of threshold values is set for each motion sensor and the vehicle movement is classified as critical when the absolute magnitude of the signal of at least one motion sensor reaches or exceeds an rth threshold value associated with it and the absolute magnitude of the signal of at least one second motion sensor reaches or exceeds a qth threshold value associated with it, wherein the condition that the rth threshold value is larger than the qth threshold value when r is larger than q it preferably applies to the threshold values which are associated with a motion sensor.

2. A method in accordance with claim 1, wherein a vehicle safety device is armed when the vehicle movement is classified as critical.

3. A method in accordance with any one of the claims 1 or 2, wherein groups of threshold values are fixed which each include at least two threshold values which are associated with independent motion sensors, with a vehicle movement being classified as critical when at least the absolute magnitudes of the signals of the motion sensors with which the threshold values of a group are associated are reached or exceeded.

4. A method in accordance with any one of the claims 1 to 3, wherein the vehicle movement is classified as critical when the absolute magnitude of the signal of at least one motion sensor reaches or exceeds a second threshold value (Y_thresh; Z_thresh) associated with it and the absolute magnitude of the signal of at least one further motion sensor reaches or exceeds a first threshold value (Z_min_thresh; Y_min_thresh) which is associated with it and which is preferably smaller than a second threshold value associated with the further motion sensor.

5. A method in accordance with any one of the claims 1 to 3, wherein the vehicle movement is classified as critical when the absolute magnitudes of the signals of at least two motion sensors reach or exceed a first threshold value (Y_min_thresh; Z_min_thresh) respectively associated with them and the absolute magnitude of the signal of at least one of these motion sensors reaches or exceeds a second threshold value (Y_thresh; Z_thresh) which is associated with it and which is selected such that it is larger than the first threshold value associated with this motion sensor.

6. A method in accordance with any one of the claims 1 to 5, wherein the signals used include at least one signal (Y_accel) of a motion sensor which measures the lateral acceleration.

7. A method in accordance with claim 6, wherein the smallest threshold value (Y_min_thresh) for the signal of the motion sensor which measures the lateral acceleration is set such that, when a set boundary roll angle (α) is exceeded or reached, a classification of the vehicle movement as critical is possible in every case, preferably in that the smallest threshold value (Y_min_thresh) for the signal of the motion sensor which measures the lateral acceleration is set smaller than or equal to the absolute magnitude of the product of the sinus value of the boundary roll angle (α) with the gravitational acceleration (g).

8. A method in accordance with any one of the claims 1 to 8, wherein the signals used include at least one signal (Z_accel) of a motion sensor which measures the vertical acceleration.

9. A method in accordance with claim 8, wherein the smallest threshold value (Z_min_thresh) for the signal of the motion sensor which measures the vertical acceleration is set such that, when a set boundary roll angle (α) is reached or exceeded, a classification of the vehicle movement as critical is possible in every case.

10. A method in accordance with any one of the claims 1 to 9, wherein the signals used include at least one signal (X_accel) of a motion sensor which measures the longitudinal acceleration.

11. A method in accordance with any one of the claims 1 to 10, wherein the signals used include at least one signal from a motion sensor which measures the angular speed about a horizontal transverse axis (Y axis) and/or at least one signal from a motion sensor which measures the angular speed about a vertical axis (Z axis) and/or at least one signal from a motion sensor which measures the angular acceleration about a longitudinal axis (X axis).

12. A method in accordance with any one of the claims 1 to 11, wherein the respective smallest threshold value (Y_min_thresh, Z_min_thresh) associated with a signal of a motion sensor is selected such that it is not smaller than the absolute magnitudes of typical signals which are caused in this motion sensor by a vehicle movement in a direction or of a type which does not correspond to the direction or the type of the vehicle movement for whose measurement this motion sensor is arranged or designed.

13. A method in accordance with any one of the claims 1 to 12, wherein the respective smallest threshold (Y_min_thresh, Z_min_thresh) associated with a signal of a motion sensor is selected such that it is larger than the typical signal noise.

14. A vehicle safety device for the carrying out of a method in accordance with any one of the claims 1 to 14 comprising at least two motion sensors which are arranged or designed independently of one another in that they can serve for the measurement of movements in different directions;
a memory device for the storage of threshold values for the signals of the at least two independent motion sensors;
a comparator for the comparison of the absolute magnitudes of the signals of the at least two motion sensors with threshold values;
an evaluation device for the classification of the vehicle movement as critical when the absolute magnitude of the signal of at least one motion sensor reaches or exceeds an rth threshold value associated with it and the absolute magnitude of the signal of at least one further motion sensor reaches or exceeds an rth threshold value associated with it.

15. Use of a method in accordance with any one of the claims 1 to 13 or of a device in accordance with claim 15 for the evaluation of whether a roll movement or rollover movement of a vehicle is impending.

## Revendications

1. Procédé de commande d'un dispositif de sécurité d'un véhicule, comprenant au moins deux capteurs de mouvement, ce procédé comprenant les étapes suivantes :
mesurer les signaux (Y_accel, Z_accel) d'au moins deux capteurs de mouvement, qui sont indépendants l'un de l'autre en ce qu'ils sont disposés ou configurés pour mesurer des mouvements dans des directions différentes,
comparer la valeur absolue du signal (Y_accel; Z_accel) de l'un au moins des capteurs de mouvement à au moins une valeur seuil (Y_thresh; Z_thresh) définie pour ce signal,
comparer la valeur absolue du signal (Z_accel; Y_accel) d'au moins un autre des capteurs de mouvement à au moins une valeur seuil (Z_min_thresh, Y_min_thresh) définie pour ce signal, et
classer un mouvement du véhicule comme critique ou non critique en fonction des résultats de la comparaison,
**caractérisé en ce que**
un nombre de valeurs seuils est défini pour chaque capteur de mouvement, et que le mouvement du véhicule est classé comme critique, si la valeur absolue du signal de l'un au moins des capteurs de mouvement atteint ou dépasse une r-ième valeur seuil qui lui est associée, et si la valeur absolue du signal d'au moins un deuxième capteur de mouvement atteint ou dépasse une q-ième valeur seuil qui lui est associée, les valeurs seuils associées à un capteur de mouvement donné obéissant à la règle que la r-ième valeur seuil est plus grande que la q-ième valeur seuil, si r est plus grand que q.

2. Procédé selon la revendication 1, dans lequel un dispositif de sécurité d'un véhicule est armé, si le mouvement du véhicule est classé comme mouvement critique.

3. Procédé selon l'une des revendications 1 ou 2, dans lequel des groupes de valeurs seuils sont définis, qui comprennent chacun au moins deux valeurs seuils associées à des capteurs de mouvement indépendants, un mouvement du véhicule étant classé comme mouvement critique, si au moins les valeurs absolues des signaux des capteurs de mouvement, auxquels sont associées les valeurs seuils d'un groupe, ont été atteintes ou dépassées.

4. Procédé selon l'une des revendications 1 à 3, dans lequel le mouvement du véhicule est classé comme mouvement critique, si la valeur absolue du signal d'au moins un capteur de mouvement atteint ou dépasse une deuxième valeur seuil (Y_thresh; Z_thresh) qui lui est associée, et si la valeur absolue du signal d'au moins un autre capteur de mouvement atteint ou dépasse une première valeur seuil (Z_min_thresh; Y_min_thresh) qui lui est associée, et qui est inférieure à une deuxième valeur seuil associée à cet autre capteur de mouvement.

5. Procédé selon l'une des revendications 1 à 3, dans lequel le mouvement du véhicule est classé comme mouvement critique, si les valeurs absolues des signaux d'au moins deux capteurs de mouvement atteignent ou dépassent une première valeur seuil (Y_min_thresh; Z_min_thresh) qui leur est associée, et si la valeur absolue du signal de l'un au moins des ces capteurs de mouvement atteint ou dépasse une deuxième valeur seuil (Y_thresh; Z_thresh) qui lui est associée, et qui est sélectionnée de manière telle qu'elle soit supérieure à la première valeur seuil associée à ce capteur de mouvement.

6. Procédé selon l'une des revendications 1 à 5, dans lequel les signaux utilisés comprennent au moins un signal (Y_accel) d'un capteur de mouvement qui mesure l'accélération latérale.

7. Procédé selon la revendication 6, dans lequel la plus petite valeur seuil (Y_min_thresh) du signal du capteur de mouvement mesurant l'accélération latérale est définie de manière telle qu'en cas d'arrivée à égalité de, ou de dépassement d'un angle limite de roulis (α) prédéfini, le classement du mouvement du véhicule en tant que mouvement critique est possible dans tous les cas, de préférence grâce au fait que la plus petite valeur seuil (Y_min_thresh) du signal du capteur de mouvement, qui mesure l'accélération latérale, est inférieure ou égale à la valeur absolue du produit de la valeur du sinus de l'angle limite de roulis (α) et de l'accélération due à la pesanteur (g).

8. Procédé selon l'une des revendications 1 à 7, dans lequel les signaux utilisés comprennent au moins un signal (Z_accel) venant d'un capteur de mouvement qui mesure l'accélération verticale.

9. Procédé selon la revendication 8, dans lequel la plus petite valeur seuil (Z_min_thresh) du signal du capteur de mouvement mesurant l'accélération verticale est défini de manière telle qu'à l'arrivée à égalité de, ou au dépassement de l'angle limite de roulis (α), un classement du mouvement du véhicule en mouvement critique soit toujours possible.

10. Procédé selon l'une des revendications 1 à 9, dans lequel les signaux utilisés comprennent au moins un signal (X_accel) venant d'un capteur de mouvement qui mesure l'accélération longitudinale.

11. Procédé selon l'une des revendications 1 à 10, dans lequel les signaux utilisés comprennent au moins un signal venant d'un capteur de mouvement mesurant la vitesse angulaire autour d'un axe horizontal transversal (axe Y), et/ou au moins un signal venant d'un capteur de mouvement mesurant la vitesse angulaire autour d'un axe vertical (axe Z), et/ou au moins un signal venant d'un capteur de mouvement mesurant l'accélération angulaire autour d'un axe longitudinal (axe X).

12. Procédé selon l'une des revendications 1 à 11, dans lequel la plus petite valeur seuil (Y_min_thresh, Z_min_thresh) associée à un signal d'un détecteur de mouvement est sélectionnée de manière telle qu'elle ne soit pas inférieure aux valeurs absolues de signaux typiques qui sont déclenchés dans ce capteur de mouvement par un mouvement du véhicule dans une direction, ou mouvement d'un type, qui ne correspond pas à la direction ou au type d'un mouvement du véhicule, pour la mesure duquel ce capteur de mouvement a été agencé ou configuré.

13. Procédé selon l'une des revendications 1 à 12, dans lequel la valeur seuil la plus petite (Y_min_thresh, Z_min_thresh) respectivement associée à un signal d'un capteur de mouvement est sélectionnée de manière telle qu'elle soit supérieure au bruit typique des signaux.

14. Dispositif de sécurité d'un véhicule permettant de mettre en oeuvre un procédé selon l'une des revendications 1 à 13, comprenant
au moins deux capteurs de mouvement, qui sont disposés ou configurés de façon indépendante l'un de l'autre en ce qu'ils peuvent être utilisés pour mesurer des mouvements dans différentes directions,
un dispositif mémoire destiné à stocker un nombre de valeurs seuils pour les signaux desdits au moins deux capteurs de mouvement indépendants,
un dispositif comparateur destiné à comparer les valeurs absolues des signaux desdits au moins deux capteurs de mouvement indépendants à des valeurs seuils,
un dispositif d'évaluation destiné à produire un classement des mouvements du véhicule comme mouvement critique, si la valeur absolue du signal d'au moins un capteur de mouvement atteint ou dépasse au moins une r-ième valeur seuil qui lui est associée, et la valeur absolue du signal d'au moins un autre capteur de mouvement atteint ou dépasse une q-ième valeur seuil qui lui est associée.

15. Utilisation d'un procédé selon l'une des revendications 1 à 13 ou d'un dispositif selon la revendication 14 pour déterminer s'il y a un risque d'un mouvement de retournement ou de capotage d'un véhicule.
